Europäisches Patentamt

European Patent Office

Office européen des brevets

(11) Publication number: **0 239 772**
**A2**

## EUROPEAN PATENT APPLICATION

(21) Application number: 87102403.0

(22) Date of filing: 20.02.87

(51) Int. Cl.4: **H01S 3/06** , **H01S 3/17** , **H01S 3/094**

(30) Priority: 28.02.86 US 835513

(43) Date of publication of application:
**07.10.87 Bulletin 87/41**

(84) Designated Contracting States:
**AT DE FR GB IT NL**

(71) Applicant: **POLAROID CORPORATION**
**549 Technology Square**
**Cambridge, Massachusetts 02139(US)**

(72) Inventor: **Hakimi, Farhad**
**131 Coolidge Avenue, Apt.627**
**Watertown, MA 02172(US)**
Inventor: **Po, Hong**
**8 Towne Lyne Road**
**Sherborn, MA 01770(US)**

(74) Representative: **Koch, Günther, Dipl.-Ing. et al**
**Patentanwälte Dipl.-Ing. C. Wallach Dipl.-Ing.**
**G. Koch, Dr. T. Haibach Dipl.-Ing. R.**
**Feldkamp Postfach 920**
**D-8000 München 33(DE)**

(54) **Optical fiber laser.**

(57) An optical fiber laser comprising a gain material within a cavity in the form of a single mode optical fiber with a core of substantially pure fused silica doped with neodymium. The gain cavity is end pumped at a nominal wavelength of 0.80 micrometers and its length and neodymium concentration are adjusted to attenuate pump energy by a factor of 2 in traveling a distance equal to its length. Dichroic mirrors are preferably integrally formed on ends of the cavity and have reflection characteristics selected so that the laser has an output at a nominal wavelength of 0.905 micrometers.

*FIG. 1*

## BACKGROUND OF THE INVENTION

This invention in general relates to optical radiation sources and in particular to improvements in lasers suitable for use in optical communication systems.

Communication by means of optical electromagnetic radiation transmitted along optical fibers is now a well-established practice made possible by the development over the past 25 years of reliable, coherent sources, low-loss optical transmission fibers, and suitable detectors. Motivating this rapid progess was the proposal of the optical maser by A. L. Schawlow and C. H. Townes in 1958 and the subsequent announcement by T. H. Maiman in 1960 of its actual reduction to practice with laser action in ruby. With the achievement of the coherent, or quasi coherent, source came the recognition that the efficient transmission of radiation from laser sources along glass optical fibers of suitably low attenuation could provide communication systems which offered significant advantages over metallic cables, the most important of which were dramatically higher information carrying capacities over greater distances without repeaters. In addition, compactness and substantially reduced weight, along with lower manufacturing and installation costs, were also incentives adding impetus to this progress to the point where now systems are under consideration for installation in the field which are approaching the theoretical limit for signal detection and information per optical bandwidth.

Some of the basic characteristics for a light source for use in communications applications include spectral emission, power output, physical size and power efficiency.

Source spectral emission must complement the optical fiber attenuation and dispersion properties if efficient use of source power is to be made. Attenuation characteristics of optical fiber waveguides vary as a function of wavelength, generally decreasing with increasing wavelength for wavelengths shorter than 1.5 microns. Regions from 0.8 to 1.6 micrometers have attractive low-loss transmission. At the shorter wavelength end, loss is sufficiently low for many applications, but where maximum distance is to be covered between repeaters, except for the water absorption band near 1.4 micrometers, the longer spectral region from 1.2 to 1.6 micrometers is more suitable.

Source spectral width is also an important consideration. To maximize information capacity of the fiber, single mode fiber is used. The refractive index of fiber material also varies with wavelength. This latter property, known as material dispersion, causes a pulse spreading which reduces the data rate capacity of the fiber, and the pulse spreading is more severe with spectrally wider sources than with narrower ones. Consequently, it is important that the spectral width of the source be as narrow as possible to be consistant with high data rate transmission. The spectral width requirement of the laser is somewhat relaxed in the region of zero dispersion at about 1.3 to 1.5 micrometers, the precise wavelength dependence depends on the composition of the glass and the index variation for the single mode fiber. Inasmuch as the spectral emission characteristics of the source vary with temperature, it is important to keep in mind how these changes occur and to provide appropriate temperature control where necessary for the application in mind.

In wavelength division multiplexing applications, it is important that the width of the spectral emission of the source be made as narrow as possible in order to achieve a high density of multiplexing. For wavelength multiplexing, the line width and its shape directy influence cross-talk levels.

In general then, the source spectral output should be in a region where fiber attenuation is low and should be of narrow bandwidth to minimize dispersion effects and maximize both channel density and bandwidth, all while being very stable.

High signal power output is generally desirable because with higher power more attenuation can be tolerated before signal power level falls below a level for satisfactory detection. In addition, the power output distribution should be such that efficient coupling to the fiber is possible given its diameter and numerical aperture. At the other extreme, the power should not be so high as to exceed the material linearity limits unless for some special purpose that is intended.

Physical size is a consideration, and the source should be generally small and compact for convenience of handling and weight and space considerations. Although physical size is of importance, it is equally important to be able to efficiently couple the source output into the fiber core.

The power efficiency of the source determines how much input power is required of the pump and, hence, also the heat dissipation requirements. Poor efficiency means higher input power requirements for given optical power output. This can present power supply problems for remotely located equipment. Inefficiently converted source energy also results in excessive heating, requiring appropriate heat dissipation arrangements otherwise unnecessary.

Those skilled in the art have developed a variety of sources which satisfy the above requirements, some more satisfactorily than others depending on detailed differences, but all share in common fundamental ideas of operation.

For lasing optical sources, the conditions for laser oscillation in the visible and infrared regions of the spectrum are well understood. Fundamentally, these require that the laser material be capable of fluorescing and that an inversion in population take place between two different energy levels between which the fluorescent emission takes place. There is also the requirement that there be a fairly strong absorption of the pumping energy to permit pumping action by the light source. In addition, feedback is required through the resonant cavity containing the laserable material.

The ruby laser demonstrated by Maiman in 1960 was single-crystal aluminum oxide "doped" with chromimum impurities. During the intervening years, several side pumped crystalline or glass systems with impurity ions as, for example, glass doped with neodymium or other rare earth ions, have been developed.

A large number of gas lasers with outputs in the range from the far IR to the UV are known. Important among these are helium-neon, argon, and krypton as well as several molecular gas systems such as carbon dioxide and carbon monoxide.

Solid state semiconductor lasers are known where the electron current flowing across a junction between P-and N-type material produces extra electrons in a conduction band. These radiate upon their making a transition back to the valence band or lower-energy states. If the junction current is large enough, there will be more electrons near the edge of the conduction band than there are at the edge of the valence band and a population inversion may occur.

Aside form the basic known material systems and structures, lasers in the form of optical fibers in which the lasing material has been incorporated into the core have been proposed; for example, in U.S. Patents 3,958,188 and 4,044,315.

In spite of the many innovations made in the laser art, improved laser structures are still required and can be usefully employed in optical fiber communication systems and in other systems, as well, for a variety of applications. Accordingly, it is a primary object of the present invention to provide an improved laser structure.

It is another object of the present invention to provide an improved laser structure having a high optical efficiency.

It is yet another object of the present invention to provide an improved laser structure having a narrow output bandwidth at 0.905 micrometers more or less.

Other objects of the invention will, in part, be obvious and will, in part, appear hereinafter. The invention accordingly comprises the structure exemplified in the detailed disclosure which follows.

## SUMMARY OF THE INVENTION

This invention generally relates to optical sources and specifically to improvements in lasers particularly suitable for use in optical communications systems requiring high channel density and data transmission rates.

The laser of the invention comprises an optical gain cavity in the form of a single mode optical fiber in which the laser gain material, trivalent neodymium, is present as neodymium oxide in the fiber core, which is preferably a host of pure fused silica. The preferred concentration of neodymium oxide is 0.5 weight percent for an ideal cavity length of approximately 1.5 cm, but can be lower for longer cavity lengths which in any concentration preferably do not exceed 100 to 150 times the ideal, defined as that length causing an attenuation by a factor of 2 for pump power traveling one length. Shorter lengths down to 1.5 millimeters are also possible for concentrations up to 5 weight percent neodymium oxide.

Integrally formed on each end of the optical fiber gain cavity are dichroic filters which operate to provide feedback for lasing action and to permit end pumping.

Pump power is suppled by a laser diode and is preferably end coupled into the laser core via bulk optics through one of the dichroic filters. The exit dichroic filter is a high reflector at both the pump wavelength and the laser wavelength. The laser diode is preferably of GaAlAs with an output wavelength nominally at 0.80 micrometers, and the laser has an output at a nominal wavelength of 0.905 micrometers. Efficient absorption of pump power is assured by adjusting the laser cavity length and neodymium ion concentration so that the pump power is attenuated by about a factor of two in travelling one length of the gain cavity.

## BRIEF DESCRIPTION OF THE DRAWINGS

The novel features that are considered characteristic of the invention are set forth with particularity in the appended claims. The invention itself, however, including its organization, material structure, and method of operation, together with other objects and advantages thereof, will best be understood from the following detailed description when read in connection with the accompanying drawings wherein the same number has been used to denote a part wherever it appears in the figures and wherein:

Fig. 1 is a diagrammatic elevation of the laser system of the invention;

Fig. 2 is a graph illustrating the absorption spectrum of neodymium oxide employed in the laser of the invention;

Fig. 3 is a graph illustrating the relative fluorescent spectrum as a function of wavelength for neodymium oxide in pure fused silica;

Fig. 4 is a typical energy level diagram for trivalent neodymium in a host of pure fused silica giving the relative fluorescent spectrum of Fig. 3; and

Fig. 5 is a graph showing the output of the laser of Fig. 1.

## DETAILED DESCRIPTION

The inventive optical fiber laser is one that has a narrow line output at a wavelength nominally at 0.905 micrometers, a region of the spectrum which is suitable for optical fiber communication.

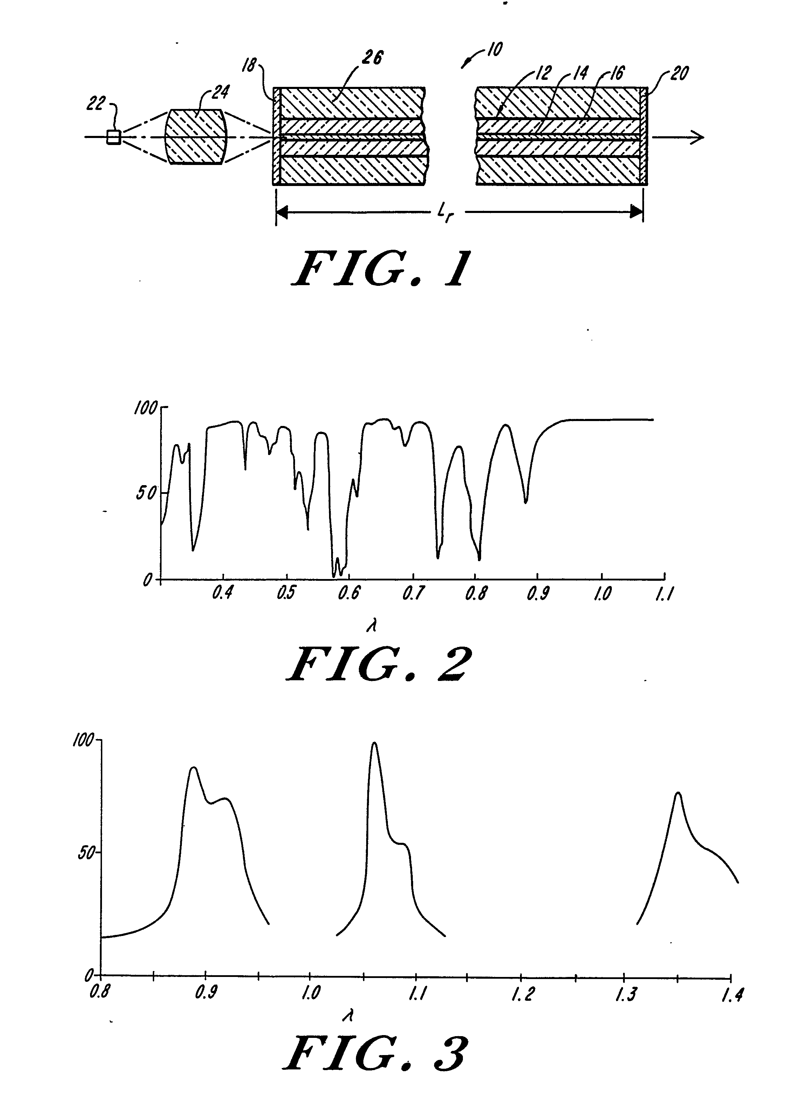

The desirable characteristics of the inventive laser are achieved through the use of a combination of functional elements and a material system which may best be understood by now referring to Fig. 1 where the inventive laser is designated generally as 10.

The major components of laser 10 are a gain cavity in the form of a single mode optical fiber 12 which comprises a core 14 surrounded by a cladding 16. At the left end of optical fiber 12 is a dichroic filter 18, and at its right end another dichroic filter 20, both preferably integrally formed in optical contact with the ends of the optical fiber 12. Both dichroic end filters are fabricated in a well-known way to provide required reflection and transmission properties to be described.

Energy from a pump source in the form of a laser diode 22 may be coupled into the left end of the fiber core 14 through dichroic filter 18 by way of a bulk optical arrangement designated generally as 24.

Optical fiber gain cavity 12 is structured to propagate just single mode over the desired output. To make fiber 12 propagate single mode, its geometry and material parameters are selected to satisfy the relation:

$$2\pi \, a/\lambda \, (n_1^2 - n_2^2)^{1/2} < 2.405$$

where a is the core radius, $\lambda$ is the wavelength, $n_1$ and $n_2$ are the core and cladding indices of refraction, respectively, and 2.405 is a constant the value of which is the $0^{th}$ order Bessel function at the first root. Since the wavelength region of most interest is in the near infrared where optical fiber transmission attenuation is small, the diameter of the core is on the order of a few microns, more or less, while that of the cladding can be conveniently made larger and will be on the order of 80 to 100 micrometers, more or less. In addition, the geometry of core 14 and cladding 16 can be non-circular and still be single mode propagating, but if of non-circular geometry, the previous equation is only approximately true and is to be applied accordingly.

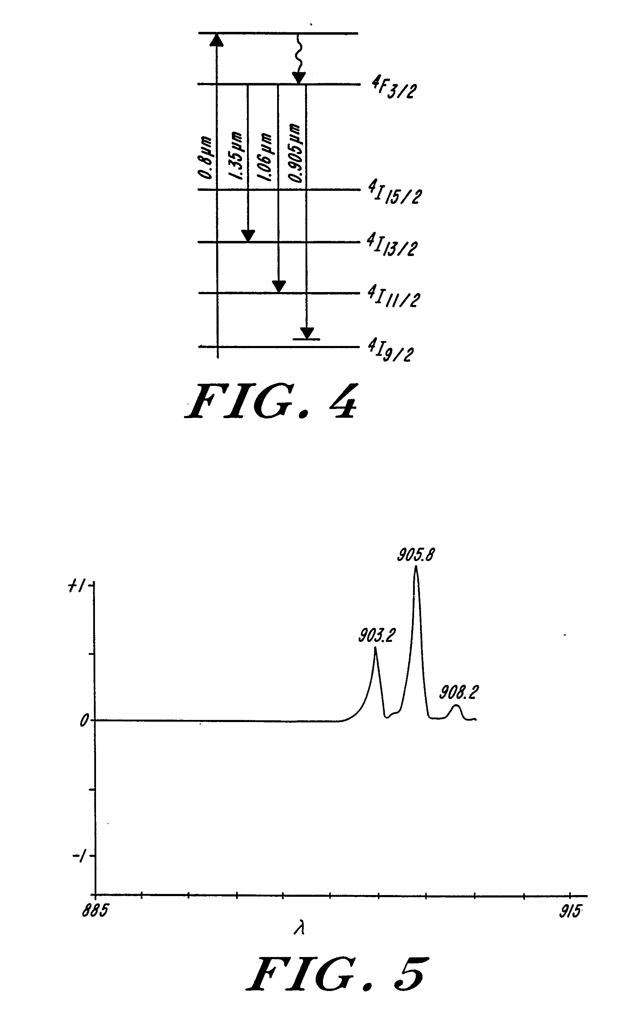

The material composition of core 14 is essentially of pure fused silica doped uniformly throughout with a predetermined concentration of active trivalent neodymium ions ($Nd^{3+}$) in the form of neodymium oxide. The absorption and fluorescence spectrums for this material are given, respectively, in Figs. 2 and 3, and a typical energy level diagram for trivalnt neodymium in a host of pure fused silica is shown in Fig. 4.

Despite the unfavorable gain properties for laser action at a central wavelength of 0.905-0.91 micrometers as suggested in Fig. 3 and, more importantly, the partial three level character of this material system, it has been discovered that lasing action at a nominal wavelength of 0.905 micrometers can be achieved with available levels of pump power provided care is taken in setting the gain cavity length, concentration of neodymium ions, and dichroic filter characteristics.

Systems that are partially three level in character, such as the one here are generally recognized as more difficult to lase because they require more pumping power than four level systems. The additional power is needed to overcome the population in the terminal state as compared with lower requirements on excited state population for the four level systems which requires an upper state population only sufficient to provide gain to overcome cavity losses with a zero population in the terminal state.

To satisfy the population inversion needs of the partially three level system, an ideal laser cavity length has been found for lasing action with the present system. That length L $_r$ is, for a given concentration of neodymium ions, whatever length corresponds to an attenuation by a factor of 2 of pump power traveling one length of the laser gain cavity 12. This ideal length will allow laser action with near minimum pump power. It is not so short that it will not absorb enough power. Nor is it so long that an excessive amount of pump power is required to get the necessary population inversion from available sources, such as GaAlAs laser diodes.

For exmaple, the calculated ideal length for a concentration of neodymium ions of 0.5 weight percent would be 1.54 centimeters with a pump power requirement for threshold estimated to be within the range between 1.5 and 2.5 milliwatts. The measured output of a 10 centimeter laser with 0.5 weight percent of neodymium ions and a pump power at threshold within the range between 10 and 15 milliwatts is shown in Fig. 5. This laser, about 6.5 times longer than the ideal for a 0.5 weight percent concentration, suggests that the upper limit on laser length should be no more than 100 or 150 times the ideal length for a given concentration of dopant. Or, for 0.5 weight percent neodymium, the maximum length would be 230 centimeters.

In addition to proper length for a given concentration of neodymium, it is important for the primary emission spectrum of the pump to have at least one line at one of the absorption lines of Fig. 2. Conveniently, 0.80 micrometers is preferred because of the availability of reliable laser diodes at this wavelength.

As in other resonant cavity structures, the length, $L_r$, also determines the frequency or wavelength of the resonances supported in the cavity and is an integral number N of half-wavelengths, i.e.,

$$L_r = \frac{N \lambda}{2 n_e}$$

where $\lambda$ is the free space wavelength and $n_e$ is the effective index of the core 14 at the resonant mode.

To assist in fabricating the laser end filters, 18 and 20, the optical fiber laser is placed inside of a glass capillary tube 26 and is potted there to remain fixed in place. The ends of this tube, along with the optical fiber 12 are ground and polished and the filters 18 and 20, are then formed on the polished ends in a well-known manner such as by vapor deposition. In this way, the capillary tube 26 both aids in the fabrication of the filters, 18 and 20, and provides a means for easily handling laser 10. For this purpose, the outside diameter of the capillary tube 26 is made to to be several millimeters, or more, for convenience. Alternatively, the fiber can be made with an oversized cladding, say 2 millimeters outside diameter, so that it is self-supporting and does not require a capillary tube.

The dichroic properties of filter 18 should be such that it is transparent at the pumping wavelength and reflective at 0.905 micrometers, while filter 20 needs to be partially transmissive at 0.905 micrometers and reflective at the pumping wavelength.

As mentioned earlier, laser diode 22 is preferably a well-known gallium aluminum arsenide type with a spectral output at approximately 0.80 micrometers, an emission restricted to a wavelength interval of less than 100 angstroms. Its power level is regulated by controlling its injection current, and the bulk optics 24 are preferably chosen to match the numerical aperture (NA) of the laser diode 22 to the NA of the optical fiber 12 which is approximately 0.3, for example. Thus, these components represent a means by which it is possible to controllably end couple energy into the fiber core 12 to cause the required population inversion above threshold to provide lasing action in the cavity. As will be appreciated by observing Fig. 2, the spectral line output of the laser diode 22 occurs at one of the peak absorption bands for the material in the region of 0.80 micrometers. The absorption bands at 0.74 micrometers and 0.88 micrometers can also be used with suitable pump sources at these wavelengths.

Those skilled in the art may practice the invention in other ways in accordance with its teachings and still be within its scope. Therefore, it is intended that all matter contained in the above description or shown in the accompanying drawings shall be interpreted as illustrative and not in a limiting sense.

**Claims**

1. An optical fiber laser comprising:
a gain cavity formed of a length of single mode optical fiber including a core of given index of refraction surrounded by a cladding having an index of refraction higher than that of said core, said core being fabricated of a material consisting essentially of fused silica having incorporated therein a predetermined concentration of neodymium ions and having a fluorescence spectrum with an emission line nominally at 0.905 micrometers;
reflection means optically coupled to each end of said fiber gain cavity for providing feedback in said gain cavity at said emission line of said gain cavity core material and for permitting pumping energy to be introduced into said gain cavity core at at least one absorption line of said gain cavity material; and
means for pumping energy into said gain cavity core through one end thereof so that said gain cavity oscillates substantially at just said one emission band at 0.905 micrometers.

2. The optical fiber laser of claim 1 wherein said length of said gain cavity core and said concentration of said neodymium ions therein are selected to attenuate pumping energy by a factor of two (2) in traveling a distance along said gain cavity core equal to its length.

3. The optical fiber laser of claims 1 - 2 wherein said concentration of said neodymium ions is 5.0 weight percent or less.

4. The optical fiber laser of claims 1 - 3 wherein said length of said gain cavity core is within the range between 0.15 and 230 centimeters.

5. The optical fiber laser of claims 1 - 4 wherein said concentration of neodymium ions is 0.5 weight percent and said length of said gain cavity core is 1.54 centimeters.

6. The optical fiber laser of claims 1 - 5 wherein said means for pumping energy into said gain cavity core comprises a laser diode having a power rating within the range between 1.5 and 100 milliwatts.

FIG. 1

FIG. 2

FIG. 3

$^4F_{3/2}$

0.8 μm  1.35 μm  1.06 μm  0.905 μm

$^4I_{15/2}$

$^4I_{13/2}$

$^4I_{11/2}$

$^4I_{9/2}$

*FIG. 4*

$+1$

905.8

903.2

908.2

0

$-1$

885    $\lambda$    915

*FIG. 5*